# EUROPÄISCHE PATENTSCHRIFT

(11) **EP 1 046 974 B1**
(45) Veröffentlichungstag und Bekanntmachung des Hinweises auf die Patenterteilung: **18.05.2005**
(21) Anmeldenummer: 00201025.4
(22) Anmeldetag: 21.03.2000
(51) Int. Cl.: G05D 23/02, F16K 31/60

(54) **Heizkörperventil-Steueraufsatz**
Actuating device for a radiator valve
Dispositif de réglage d'un robinet de radiateur

(30) Priorität: 20.04.1999 DE 19917780
(43) Veröffentlichungstag der Anmeldung: 25.10.2000
(73) Patentinhaber: Danfoss A/S, 6430 Nordborg (DK)
(72) Erfinder: Petersen, Soren G., 7430 Ikast (DK); Rasmussen, Bent, 8600 Silkeborg (DK); Nielsen, Kuno, 8600 Silkeborg (DK); Hansen, Martin Irming, 8620 Kjellerup (DK)

(56) Entgegenhaltungen:
- EP-A- 0 859 303
- DE-A- 2 905 307
- DE-C- 4 442 402
- FR-A- 1 554 407
- US-A- 4 232 817

## Beschreibung

Die Erfindung betrifft einen Heizkörperventil-steueraufsatz mit einem Gehäuse, einem Aufsatzstutzen mit einer inneren Eingriffsgeometrie und einem Außengewinde, einer Überwurfmutter, die auf dem Außengewinde verdrehbar ist, und einem Ring zum Abdecken einer Lücke zwischen Gehäuse und Überwurfmutter.

Ein derartiger Aufsatz ist aus DE 44 42 402 C1 bekannt. Dort ist der Ring als Hülse ausgebildet, der axial von einer Montagelage, in der die Überwurfmutter zugänglich ist, in eine Gebrauchslage, in der der Aufsatzstutzen mit der Überwurfmutter abgedeckt ist, verstellbar ist. Mit Hilfe der Hülse kann man das optische Erscheinungsbild des montierten Heizkörperventil-Steueraufsatzes verbessern, weil die Lücke zwischen dem eigentlichen Ventil und dem Gehäuse des Steueraufsatzes abgedeckt wird. Allerdings ist die Handhabung eines derartigen Steueraufsatzes bei der Montage nicht unproblematisch. Die Hülse muß auch in der Montagelage ein Stück weit aus dem Gehäuse vorstehen, damit sie ergriffen werden kann. In diesem Bereich kann sie aber die Finger eines Monteurs oder ein Werkzeug behindern, das zum Festziehen der Mutter verwendet wird.

Der Erfindung liegt die Aufgabe zugrunde, einen Zwischenraum zwischen der Überwurfmutter und dem Gehäuse abzudecken, ohne die Montage zu behindern.

Diese Aufgabe wird bei einem Heizkörperventil-Steueraufsatz der eingangs genannten Art dadurch gelöst, daß der Ring am Gehäuse drehbar angeordnet ist und mit der Überwurfmutter in Dreheingriff steht.

Damit kann der Ring nicht nur zum Abdecken der Lücke zwischen der Überwurfmutter und dem Gehäuse verwendet werden, sondern auch als Montagehilfe. Wenn man den Ring dreht, dann wird auch die Überwurfmutter verdreht. Sie kann damit auf dem Außengewinde axial verstellt werden und somit den Steueraufsatz an dem gewünschten Heizkörperventil festlegen. Der Gebrauch eines zusätzlichen Werkzeuges zum Festziehen der Überwurfmutter ist, wenn überhaupt, lediglich am Ende des Befestigungsvorgangs erforderlich. In diesem Fall ist die Überwurfmutter aber axial weit genug unter dem Ring hervorgetreten, so daß ein Werkzeug angesetzt werden kann. In den übrigen Abschnitten des Befestigungsvorganges reicht das mit Hilfe des Ringes auf die Überwurfmutter übertragene Drehmoment aus, um die Verschraubung zu bewirken.

Vorzugsweise ist der Ring am Gehäuse in Axialrichtung festgelegt. Wenn im folgenden von Axial-, Radial- oder Umfangsrichtung die Rede ist, beziehen sich diese Richtungsangaben auf die Achse des Außengewindes. Wenn der Ring am Gehäuse in Axialrichtung festgelegt ist, dann können keine axialen Verschiebungen erfolgen, die den gewünschten optischen Eindruck des Steueraufsatzes verändern könnten. Es ist immer sichergestellt, daß kein störender Spalt zwischen dem Gehäuse und der Überwurfmutter entsteht, und zwar auch nicht bei einer versehentlichen falschen Handhabung oder bei einem Unterlassen des Rückstellens des Ringes. Dies erhöht die Montagesicherheit.

Vorzugsweise ist die Überwurfmutter auf dem Außengewinde so dicht am Gehäuse positionierbar, daß äußere Endbereiche des Aufsatzstutzens radial nach außen verformbar sind. In vielen Fällen weist der Aufsatzstutzen in einer Umfangswand axial verlaufende Schlitze auf, so daß der Aufsatzstutzen durch radial nach außen federnde Beine gebildet wird. Diese Beine können sich dann über Vorsprünge am Heizkörperventil hinweg bewegen. Wenn die Überwurfmutter dann in Richtung auf das axiale äußere Ende des Aufsatzstutzens geschraubt wird, werden diese Beine an den entsprechenden Teil des Heizkörperventils angelegt und festgehalten. Wenn man nun dafür Sorge trägt, daß die Überwurfmutter auf dem Aufsatzstutzen relativ weit in Richtung auf das Gehäuse geschraubt werden kann, dann wird die Montage erleichtert. Die Mutter wird nämlich so dicht am Gehäuse festgelegt, daß die Beine problemlos nach außen federn können. Erst mit einer gewollten Veränderung der axialen Lage der Mutter, wie sie über das Drehen mit Hilfe des Ringes bewirkt wird, wird die Montageendposition erreicht. Dies verhindert, daß die Überwurfmutter bei einer versehentlich falschen Handhabung, wenn beispielsweise das axiale Ende des Aufsatzstutzens nach unten gehalten wird, in eine Position fällt, wo sie das Aufspreizen der Beine verhindert.

Mit Vorteil ist der Ring in einer umlaufenden Nut am Gehäuse geführt. Dies erleichtert es, die Verdrehbarkeit einerseits und die Festlegung in Axialrichtung andererseits sicherzustellen.

Vorzugsweise sind der Ring und das Gehäuse miteinander verrastet. Dies erleichtert die Produktion. Man kann den Ring auf das Gehäuse aufschieben und durch axialen Druck, bei dem einander entgegengesetzte Vorsprünge hintereinander einrasten, montieren. Natürlich ist es auch möglich, den Ring aus mehreren Teilen, beispielsweise zwei Teilen, zusammenzusetzen, wobei in diesem Fall die Verrastung zwischen Gehäuse und Ring dadurch erfolgen kann, daß die beiden Ringteile miteinander verrastet werden.

Vorteilhafterweise ist der Ring gegenüber der Überwurfmutter um einen begrenzten Winkel frei verdrehbar. Der Ring muß zwar in der Lage sein, ein gewisses Drehmoment auf die Überwurfmutter zu übertragen, um die Überwurfmutter auf dem Außengewinde verdrehen zu können. Dieser Dreheingriff muß jedoch nicht über den gesamten Umfang erfolgen können. Wenn der Ring im übrigen frei verdrehbar ist, dann kann man diese Möglichkeit ausnutzen, um beispielsweise eine gefälligere optische Gestaltung zu erzielen oder Maßnahmen zu treffen, die eine bessere Durchlüftung des Steueraufsatzes gewährleisten. Letzteres ist insbesondere dann von Vorteil, wenn der Steueraufsatz als Thermostataufsatz ausgebildet ist.

Die begrenzte relative Verdrehbarkeit wird vorzugsweise dadurch realisiert, daß die Überwurfmutter mindestens einen radial nach außen und der Ring mindestens einen radial nach innen ragenden Vorsprung aufweist, die einander in Umfangsrichtung zumindest teilweise überdecken, wobei die Lücke zwischen Vorsprüngen an einem Teil größer ist als die Breite der Vorsprünge am anderen Teil. Zur Drehmomentübertragung wird der Ring so lange gedreht, bis sein Vorsprung beziehungsweise seine Vorsprünge an den entsprechenden Vorsprüngen der Überwurfmutter anliegen. Ein weiteres Verdrehen des Ringes bewirkt, daß dessen Vorsprünge die Vorsprünge der Mutter vor sich herschieben und damit das gewünschte Drehmoment auf die Überwurfmutter übertragen. Wird die Drehrichtung des Ringes geändert, dann heben sich die Vorsprünge voneinander ab. Der Ring kann nun relativ zur Überwurfmutter so lange in die andere Richtung verdreht werden, bis seine Vorsprünge am anderen Ende der Lücke zwischen den Vorsprüngen an der Überwurfmutter mit den vorher nicht beaufschlagten Drehmomentangriffsflächen des entsprechenden Vorsprungs zur Anlage kommen. Dann kann die Verdrehung der Überwurfmutter in die entgegengesetzte Richtung erfolgen.

Vorzugsweise sind mindestens zwei Vorsprungspaare rotationsymmetrisch zur Drehachse angeordnet. Damit wird auch die Drehmomentübertragung beim Ein- und Ausschrauben der Überwurfmutter symmetrisch gehalten, und die Gefahr von versehentlichen Beschädigungen bleibt klein.

In einer besonders bevorzugten Ausgestaltung ist vorgesehen, daß zwischen der Überwurfmutter und dem Ring ein achsparalleler Ringspalt angeordnet ist, der von Dreheingriffselementen unterbrochen und in beide axialen Richtungen offen ist. Diese Ausgestaltung ist vor allem dann von Vorteil, wenn der Steueraufsatz mit einem Thermostatelement versehen ist, das das Heizkörperventil thermostatisch steuert. In diesem Fall möchte man Maßnahmen treffen können, um die Wärmeübertragung vom Ventilgehäuse auf das Gehäuse des Steueraufsatzes und damit auf das Thermostatelement klein zu halten. Wenn man nun den Ringraum vorsieht, ermöglicht man eine Luftströmung, die einen Teil der Wärme abführt. Der Thermostataufsatz wird dann hauptsächlich von der Umgebungsluft beaufschlagt.

Alternativ oder zusätzlich kann der Ring mindestens zwei einander gegenüberliegende Öffnungen aufweisen. In diesem Fall wird ebenfalls eine Luftströmung durch den Raum ermöglicht, der an und für sich durch den Ring abgedeckt ist.

Vorteilhafterweise weist der Ring an seiner radialen Außenseite eine Anordnung von Drehmomentangriffsflächen auf. Dies erleichtert es, ein Drehmoment aufzubringen und die Überwurfmutter bereits von Hand mit einer gewissen Festigkeit aufzuschrauben. Gegebenenfalls kann man auch an dem Ring ein Werkzeug ansetzen, das aufgrund der Drehmomentangriffsfläche eine ausreichende Momentenübertragung ermöglicht.

Hierbei ist besonders bevorzugt, daß die Anordnung eine Mehrzahl von radial nach außen vorstehenden Stegen aufweist, deren Breite in Umfangsrichtung der Breite von entsprechenden Stegen auf der Außenseite der Überwurfmutter entspricht. Dies Ausgestaltung hat zwei Vorteile. Zum einen ergibt sich dadurch ein gefälliges Äußeres. Das "Muster" auf der Außenseite des Ringes stimmt im wesentlichen mit dem "Muster" auf der Außenseite der Überwurfmutter überein. Zum anderen kann man dann für das Verdrehen der beiden Teile Ring und Überwurfmutter das gleiche Werkzeug verwenden.

Die Erfindung wird im folgenden anhand von bevorzugten Ausführungsbeispielen in Verbindung mit der Zeichnung beschrieben. Hierin zeigen:
- Fig. 1: ein en Längsschnitt durch einen Heizkörperventil-Thermostataufsatz.
- Fig. 2: einen Schnitt II-II nach Fig. 1,
- Fig. 3: eine Außenansicht des Aufsatzes,
- Fig. 4: den Thermostataufsatz im montierten Zustand an einem Heizkörperventil und
- Fig. 5: eine abgewandelte Ausführungsform.

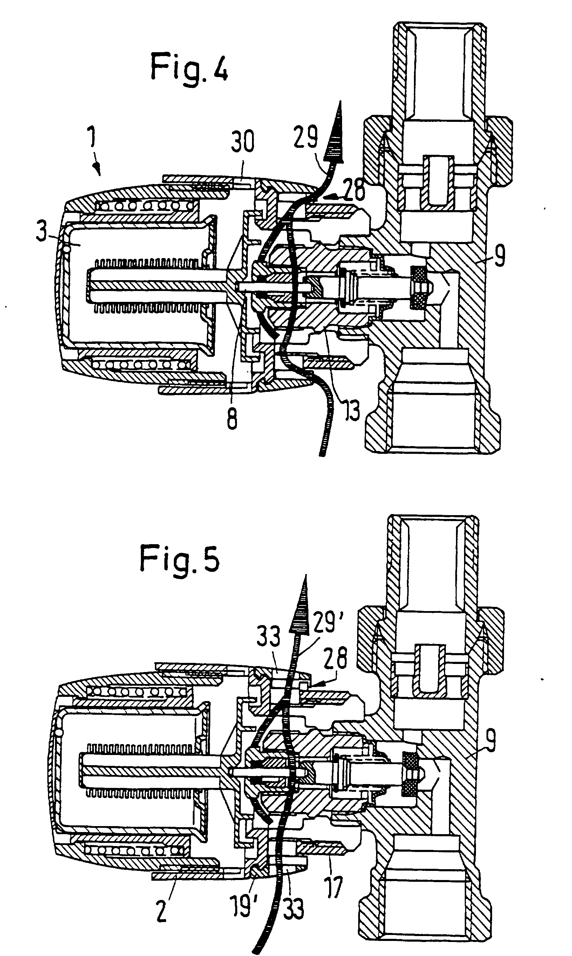

Ein Heizkörperventil-Steueraufsatz ist im vorliegenden Ausführungsbeispiel als Thermostataufsatz 1 ausgebildet mit einem Gehäuse 2, in dem ein Thermostatelement 3 angeordnet ist. Die axiale Position des Thermostatelements 3 kann mit Hilfe eines Drehgriffs 4 verändert werden, der mit dem Gehäuse über ein Gewinde 5 verbunden ist. Das Thermostatelement 3 wirkt über ein Betätigungsglied 6 auf eine Stößelfläche 7, an der im montierten Zustand (Fig. 4) ein Stößel 8 eines Heizkörperventils 9 anliegt. Je weiter der Stößel 8 eingedrückt wird, desto stärker drosselt das Heizkörperventil 9.

Selbstverständlich kann das Ventil auch zur Steuerung einer Heizfläche bei einer Fußbodenheizung verwendet werden.

Zur Befestigung des Thermostataufsatzes 1 am Ventil 9 ist ein Aufsatzstutzen 10 mit einer Eingriffsgeometrie 11 vorgesehen. Die Eingriffsgeometrie 11 weist beispielsweise einen nach innen ragenden Vorsprung 12 auf, der hinter einem entsprechenden Gegenvorsprung 13 am Heizkörperventil 9 zur Anlage gebracht werden kann. Der Aufsatzstutzen 11 weist in Umfangsrichtung verteilt vier axial verlaufende Schlitze 14 auf, die zwischen sich Beine 15 bilden, die aufgrund der Schlitze 14 radial etwas nach außen federn können, um die Vorsprünge 12, 13 aneinander vorbeiführen zu können.

Auf der Außenseite des Aufsatzstutzens 10 ist ein Außengewinde 16 angebracht, auf das eine Überwurfmutter 17 geschraubt ist. Das Außengewinde 16 erstreckt sich bis zum Gehäuse 2, so daß die Überwurfmutter 17 auf der gesamten Länge des Aufsatzstutzens 10 in jeder gewünschten Position festgelegt werden kann. Sie kann also beispielsweise bis zum Gehäuse 2 geschraubt werden, so daß sie beim Aufsetzen des Thermostataufsatzes 1 auf das Ventil 9 das Ausfedern der Beine 15 nicht behindert.

Im montierten Zustand (Fig. 4), d.h. dann, wenn die Überwurfmutter 17 so weit weg wie möglich vom Gehäuse 2 geschraubt worden ist, entsteht zwischen dem Gehäuse 2 und der Überwurfmutter 17 eine Lücke oder ein Spalt 18. Dieser Spalt 18 ist durch einen Ring 19 abgedeckt, der über eine Rastverbindung 20 so mit dem Gehäuse verbunden ist, daß er in Axialrichtung festgelegt ist, gegenüber dem Gehäuse 2 aber frei verdreht werden kann. Hierzu weist das Gehäuse 2 eine umlaufende Nut 21 auf, in die ein Vorsprung 22, der ebenfalls umlaufend ausgebildet sein kann, am Ring 19 eingreift. Der Ring 19 kann seinerseits ebenfalls eine Nut 23 aufweisen, in die ein Vorsprung 24 am Gehäuse eingreift. Durch entsprechend abgeschrägte Flächen am Ring 19 und am Gehäuse 2 läßt sich der Ring 19 am Gehäuse 2 einrasten. Hierzu wird er axial auf das Gehäuse 2 aufgeschoben. Er weitet sich kurzzeitig radial auf und schnappt dann wieder radial zusammen.

Sämtliche Richtungsangaben beziehen sich auf die Rotationsachse 25 des Außengewindes 16.

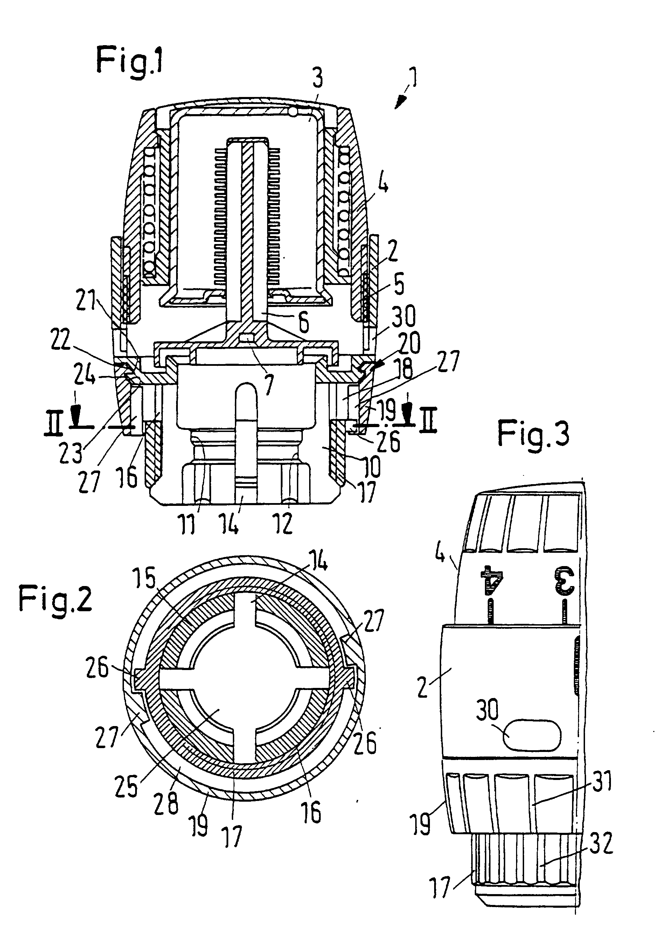

Wie insbesondere aus Fig. 2 zu erkennen ist, weist die Überwurfmutter 17 zwei radial nach außen ragende Vorsprünge 26 auf, während der Ring 19 zwei radial nach innen ragende Vorsprünge 27 aufweist. Hierbei sind die Lücken zwischen den beiden Vorsprüngen 27 in Umfangsrichtung größer als die Breite der Vorsprünge 26 in Umfangsrichtung und umgekehrt. In der in Fig. 2 dargestellten Lage kann der Ring 19 bei Drehung im Uhrzeigersinn die Überwurfmutter 17 mitnehmen, also ein Drehmoment auf die Überwurfmutter übertragen. Wird der Ring 19 hingegen im Gegenuhrzeigersinn gedreht, dann ist eine freie Drehung über einen Winkelbereich von 180° abzüglich der Breite der beiden Vorsprünge 26, 27 möglich, bevor der jeweilige Vorsprung 27 an den Vorsprung 26 zur Anlage kommt, den er bislang noch nicht beaufschlagt hat. Diese Ausgestaltung hat zwei Vorteile. Zum einen läßt sich die Winkelposition des Ringes 19 in gewissen Grenzen nach erfolgter Montage wieder frei einstellen, so daß man ein gefälliges Äußeres des Thermostataufsatzes 1 erzielen kann. Zum anderen wird zwischen dem Ring 19 und der Überwurfmutter 17 ein Ringspalt 28 belassen, der nur durch die Vorsprünge 26, 27 unterbrochen ist, ansonsten aber an beiden axialen Enden offen ist. Dies erlaubt es, wie aus Fig. 4 zu erkennen ist, daß eine durch einen Pfeil 29 dargestellte Luftströmung den Teil des Ventils 9 umstreicht, der in Richtung auf den Thermostataufsatz 1 vorsteht. Damit wird eine gewisse Wärmemenge abgeführt, die dann nicht mehr das Thermostatelement 2 beeinflussen kann. Die Beeinflussung des Thermostatelements 3 erfolgt dann überwiegend durch die Umgebungsluft bzw. durch Luft, die durch Öffnungen 30 an das Thermostatelement 3 gelangt.

Natürlich können auch mehr als die beiden Vorsprungspaare 26, 27 vorgesehen sein. In allen Fällen sollte aber gewährleistet sein, daß die Anordnung der Vorsprungspaare 26, 27 rotationssymmetrisch ist, so daß die Einleitung eines Drehmoments vom Ring 19 auf die Überwurfmutter 17 ebenfalls in Umfangsrichtung gleichmäßig erfolgt.

Man kann das Drehmoment vom Ring 19 auf die Überwurfmutter 17 auch auf eine andere Weise übertragen, beispielsweise durch Reibung. Hierzu kann noch eine reibungserhöhende Schicht auf der Innenseite des Ringes oder der Außenseite der Mutter, beispielsweise aus Gummi, vorgesehen sein.

Aus Fig. 3 ist zu erkennen, daß der Ring 19 auf seiner Umfangsfläche eine Reihe von radial vorstehenden und im wesentlichen axial verlaufenden Stegen 31 aufweist, die als Drehmomentangriffsflächen dienen. Diese Stege 31 haben in Umfangsrichtung im wesentlichen die gleiche Breite wie entsprechende Stege 32, die als Drehmomentangriffsflächen auf der Überwurfmutter 17 verwendet werden. Man kann dann gegebenenfalls durch Verdrehen des Ringes 19 die Stege 31, 32 in Ausrichtung zueinander bringen, um das optische Erscheinungsbild zu verbessern. Mann kann auch mit einem einzigen Werkzeug sowohl den Ring 19 als auch die Überwurfmutter 17 verdrehen, wenn diese nach erfolgter Drehung des Ringes 19 weit genug aus dem Ring 19 vorsteht.

Aus Fig. 1 ist zu erkennen, daß die Vorsprünge 27 am Ring eine so große axiale Erstreckung aufweisen, daß die Überwurfmutter 17 über ihren gesamten Bewegungsbereich mit Hilfe des Ringes 19 gedreht werden kann. Die Vorsprünge 26 bleiben dabei im gesamten Bewegungsbereich innerhalb des Ringes 19, so daß sie nach außen nicht optisch störend in Erscheinung treten.

Fig. 5 zeigt eine geringfügig abgewandelte Ausführungsform. Hinzugekommen ist lediglich, daß der Ring 19' Öffnungen 33 aufweist, durch die der Luftstrom 29' treten kann, um das Ventil 9 zu kühlen bzw. Wärme abzuführen. Natürlich ist es zusätzlich möglich, daß Luft durch den Ringspalt 28 tritt. Dieser Luftpfad wurde aus Gründen der Übersicht nicht mit eingezeichnet. Die Öffnungen 33 können nun durch die freie Verdrehbarkeit des Ringes 19' gegenüber dem Gehäuse 2 und der Überwurfmutter 17 so ausgerichtet werden, daß sie vertikal übereinanderliegen. In dieser Ausrichtung ist die Durchströmung am günstigsten.

## Patentansprüche

1. Heizkörperventil-Steueraufsatz (1) mit einem Gehäuse (2) einem Aufsatzstutzen (10) mit einer inneren Eingriffsgeometrie (11) und einem Außengewinde (16), einer Überwurfmutter (17), die auf dem Außengewinde (16) verdrehbar ist, und einem Ring (19) zum Abdecken einer Lücke (18) zwischen Gehäuse (2) und Überwurfmutter (17), **dadurch gekennzeichnet, daß** der Ring (19) am Gehäuse (2) drehbar angeordnet ist und mit der Überwurfmutter (17) in Dreheingriff steht.

2. Aufsatz nach Anspruch 1, **dadurch gekennzeichnet, daß** der Ring (19) am Gehäuse (2) in Axialrichtung festgelegt ist.

3. Aufsatz nach Anspruch 1 oder 2, **dadurch gekennzeichnet, daß** die Überwurfmutter (17) auf dem Außengewinde (16) so dicht am Gehäuse (2) positionierbar ist, daß äußere Endbereiche des Aufsatzstutzens (10) radial nach außen verformbar sind.

4. Aufsatz nach einem der Ansprüche 1 bis 3, **dadurch gekennzeichnet, daß** der Ring (19) in einer umlaufenden Nut (21) am Gehäuse (2) geführt ist.

5. Aufsatz nach einem der Ansprüche 1 bis 4, **dadurch gekennzeichnet, daß** der Ring (19) und das Gehäuse (2) miteinander verrastet sind.

6. Aufsatz nach einem der Ansprüche 1 bis 5, **dadurch gekennzeichnet, daß** der Ring (19) gegenüber der Überwurfmutter (17) um einen begrenzten Winkel frei verdrehbar ist.

7. Aufsatz nach Anspruch 6, **dadurch gekennzeichnet, daß** die Überwurfmutter (17) mindestens einen radial nach außen und der Ring (19) mindestens einen radial nach innen ragenden Vorsprung (26, 27) aufweist, die einander in Umfangsrichtung zumindest teilweise überdecken, wobei die Lücke zwischen Vorsprüngen (26) an einem Teil (17) größer ist als die Breite der Vorsprünge (27) am anderen Teil (19).

8. Aufsatz nach Anspruch 7, **dadurch gekennzeichnet, daß** mindestens zwei Vorsprungspaare (26, 27) rotationsymmetrisch zur Drehachse (25) angeordnet sind.

9. Aufsatz nach einem der Ansprüche 1 bis 8, **dadurch gekennzeichnet, daß** zwischen der Überwurfmutter (17) und dem Ring (19) ein achsparalleler Ringspalt (28) angeordnet ist, der von Dreheingriffselementen (26, 27) unterbrochen und in beide axialen Richtungen offen ist.

10. Aufsatz nach einem der Ansprüche 1 bis 9, **dadurch gekennzeichnet, daß** der Ring (19) mindestens zwei einander gegenüberliegende Öffnungen (33) aufweist.

11. Aufsatz nach einem der Ansprüche 1 bis 10, **dadurch gekennzeichnet, daß** der Ring (19) an seiner radialen Außenseite eine Anordnung von Drehmomentangriffsflächen (31) aufweist.

12. Aufsatz nach Anspruch 11, **dadurch gekennzeichnet, daß** die Anordnung eine Mehrzahl von radial nach außen vorstehenden Stegen (31) aufweist, deren Breite in Umfangsrichtung der Breite von entsprechenden Stegen (32) auf der Außenseite der Überwurfmutter (17) entspricht.

## Claims

1. Radiator valve control element (1) with a housing (2), an element connection (10) with an inner engagement geometry (11) and an outer thread (16), a union nut (17), which is rotatable on the outer thread (16), and a ring (19) for covering a gap (18) between the housing (2) and the union nut (17), **characterised in that** the ring (19) is arranged to be rotatable on the housing (2) and in rotational engagement with the union nut (17).

2. Element according to claim 1, **characterised in that** the ring (19) is fixed on the housing (2) in the axial direction.

3. Element according to claim 1 or 2, **characterised in that** the union nut (17) can be positioned on the outer thread (16) so close to the housing (2) that outer end areas of the element connection (10) can be deformed radially outwards.

4. Element according to one of the claims 1 to 3, **characterised in that** the ring (19) is guided in a circumferential groove (21) on the housing (2).

5. Element according to one of the claims 1 to 4, **characterised in that** the ring (19) and the housing (2) can be connected with each other by means of a catch.

6. Element according to one of the claims 1 to 5, **characterised in that** the ring (19) is free to rotate by a limited angle in relation to the union nut (17).

7. Element according to claim 6, **characterised in that** the union nut (17) has at least one radially outwards projecting nose (26, 27) and the ring (19) has at least one radially inwards projecting nose (26, 27), which overlap each other at least partly in the circumferential direction, the gap between noses (26) on one part (17) being larger than the width of the noses (27) on the other part (19).

8. Element according to claim 7, **characterised in that** at least two nose pairs (26, 27) are arranged to be rotation symmetrical to the rotation axis (25).

9. Element according to one of the claims 1 to 8, **characterised in that** between the union nut (17) and the ring (19) is located an axis parallel annular gap (28), which is interrupted by rotation engaging element (26, 27) and open in both axial directions.

10. Element according to one of the claims 1 to 9, **characterised in that** the ring (19) has at least two openings (33) located opposite each other.

11. Element according to one of the claims 1 to 10, **characterised in that** on its radial outside, the ring (19) has an arrangement of rotation torque application surfaces (31).

12. Element according to claim 11, **characterised in that** the arrangement has a plurality of radially outwards projecting steps (31), whose width in the circumferential direction corresponds to the width of corresponding steps (32) on the outside of the union nut (17).

## Revendications

1. Capuchon (1) de commande d'un robinet de radiateur, comportant un boîtier (2), une tubulure de capuchon (10) ayant une géométrie intérieure de préhension, et un filetage extérieur (16), un écrou-raccord (17), qui peut tourner sur le filetage extérieur (16), et une bague (19) pour recouvrir un interstice dans une cavité (18) entre le boîtier (2) et l'écrou-raccord (17), **caractérisé en ce que** la bague (19) est disposée de manière à pouvoir tourner sur le boîtier (2) et engrène avec capacité de rotation avec l'écrou-raccord (17).

2. Capuchon selon la revendication 1, **caractérisé en ce que** la bague (19) est fixée au boîtier (2) dans la direction axiale.

3. Capuchon selon la revendication 1 ou 2, **caractérisé en ce que** l'écrou-raccord (17) peut être positionné sur le filetage extérieur (16) en étant serré contre le boîtier (2) de telle sorte que les parties d'extrémité extérieures de l'embout de capuchon (10) sont déformables radialement vers l'extérieur.

4. Capuchon selon l'une des revendications 1 à 3, **caractérisé en ce que** la bague (19) est guidée dans une gorge périphérique (21) formée sur le boîtier (2).

5. Capuchon selon l'une des revendications 1 à 4, **caractérisé en ce que** la bague (19) et le boîtier (2) sont encliquetés l'un dans l'autre.

6. Capuchon selon l'une des revendications 1 à 5, **caractérisé en ce que** la bague (19) peut tourner librement sur un angle limité par rapport à l'écrou-raccord (17).

7. Capuchon selon la revendication 6, **caractérisé en ce que** l'écrou-raccord (17) comporte au moins une partie saillante (26) qui fait saillie radialement vers l'extérieur et **en ce que** l'anneau (19) comporte au moins une partie saillante (26, 27) qui fait saillie radialement vers l'intérieur, ces parties saillantes se recouvrant au moins partiellement dans la direction circonférentielle, l'interstice entre les parties saillantes (26) étant supérieur, au niveau d'une partie (17), à la largeur des parties saillantes (27) au niveau de l'autre partie (19).

8. Capuchon selon la revendication 7, **caractérisé en ce qu'**au moins deux paires de parties saillantes (26, 27) sont disposées avec une symétrie de révolution par rapport à l'axe de rotation (25).

9. Capuchon selon l'une des revendications 1 à 8, **caractérisé en ce qu'**entre l'écrou-raccord (17) et la bague (19) est disposée une fente annulaire (28) parallèle à l'axe, qui est interrompue par des éléments de saisie en rotation (26, 27) et est ouverte dans les deux directions axiales.

10. Capuchon selon l'une des revendications 1 à 9, **caractérisé en ce que** la bague (19) comporte au moins deux ouvertures (33) situées en vis-à-vis l'une de l'autre.

11. Capuchon selon l'une des revendications 1 à 10, **caractérisé en ce que** la bague (19) comporte, sur sa face extérieure radiale, un ensemble de surfaces (31) d'application d'un couple.

12. Capuchon selon la revendication 11, **caractérisé en ce que** le dispositif comporte une multiplicité de barrettes (31), qui font saillie radialement vers l'extérieur et dont la largeur correspond, dans la direction circonférentielle, à la largeur de barrettes correspondantes (32) sur la face extérieure de l'écrou-raccord (17).
